# EUROPEAN PATENT SPECIFICATION

(11) **EP 1 343 718 B1**
(45) Date of publication and mention of the grant of the patent: **24.11.2010**
(21) Application number: 01271326.9
(22) Date of filing: 06.12.2001
(51) Int. Cl.: C01B 11/02

(54) **HYDROGEN PEROXIDE-BASED CHLORINE DIOXIDE GENERATION PROCESS**
AUF WASSERSTOFFPEROXID BASIERENDES VERFAHREN ZUR ERZEUGUNG VON CHLORDIOXID
PROCESSUS DE GENERATION DE DIOXYDE DE CHLORE A BASE DE PEROXYDE D'HYDROGENE

(30) Priority: 21.12.2000 US 256964 P
(43) Date of publication of application: 17.09.2003
(73) Proprietor: Superior Plus LP, Calgary AB T2E 8V2 (CA)
(72) Inventor: COSTA, Mario, Luis, Hamilton, Ontario L8S 4A9 (CA); PU, Chunmin, Mississauga, Ontario L5A 3B3 (CA); BECHBERGER, Edward, J., Mississauga, Ontario L5C 2K8 (CA)
(74) Representative: W.P. Thompson & Co.
(86) International application number: PCT/CA2001/001742
(87) International publication number: WO 2002/049958

(56) References cited:
- WO-A-93/25470
- FR-A- 2 717 458
- US-A- 4 421 730
- US-A- 5 366 714

## Description

The present invention is concerned with the production of chlorine dioxide by reduction of acidified chlorate ion solution, using hydrogen peroxide as the reducing agent, and in particular with the production of substantially pure chlorine dioxide where the reaction medium under steady-state conditions contains a residual chlorine concentration.

It is known to produce chlorine dioxide by reduction of an acidified chlorate ion solution, using various reducing agents, such as chloride ions, sulfur dioxide, methanol, hydrogen peroxide, etc. Such processes are typically carried out continuously, preferably in a single vessel generator-evaporator-crystallizer. A single-vessel process (SVP) involving the use of hydrogen peroxide as a reducing agent is described in numerous patents and publications.

U.S. Patent No. 4,421,730 (Isa et al) discloses a hydrogen peroxide-based chlorine dioxide generation process which requires the reduction to be effected in the presence of chloride ions and a complex palladium (II) catalyst in order to achieve commercially attractive production rates. According to Isa, a residual concentration of hydrogen peroxide has to be maintained continuously in the reaction medium under steady-state conditions in order to minimize the product contamination with chlorine.

U.S. Patent Nos. 5,091,166 (Engstrom et al) and 5,091,167 (Engstrom et al) describe hydrogen peroxide based SVP type processes carried out at two different acidity ranges. U.S. Patent No. 5,091,166 covers the acidity range 2 to 5N, whereas U.S. Patent No. 5,091,167 covers the acidity range 5 to 11N. Both these patents constitute the basis of the commercial chlorine dioxide generation process marketed under the trade name SVP-HP^{™}. According to the literature describing the SVP-HP^{™} process, such an operation requires a residual hydrogen peroxide concentration to be maintained continuously in the range of 0.01 to 0.1 M in order to overcome the kinetic limitations of the chlorine dioxide generation reaction, as described, for example, in Burke et al, The Chemical Engineering Journal 60 (1995) 101-104, "Rate of reaction of chlorine dioxide and hydrogen peroxide"; Sokol "Peroxide-Based CIO₂ Process", presented in January 1993 at the 79^{th} Annual Meeting of Canadian Pulp and Paper Association.

The SVP-HP^{™} process described in the two above-mentioned patents also is reported to suffer from an excessive foam formation leading to a decrease of chlorine dioxide yield when utilizing such process.

Canadian Patent No. 2,144,468 (Falgen et al) which shares a common assignee with the latter two above-mentioned U.S. patents, suggests a remedy to the excessive foaming problem by minimizing the steady-state concentration of tin-based stabilizer of hydrogen peroxide in the reaction medium. However, the control of tin content in the reaction medium is not easily achievable. A specific recommendation stated in that patent, namely a reduction of the tin concentration in the hydrogen peroxide feed solution, may result in the destabilization of the feedstock, thus creating an unsafe situation.

U.S. Patent No. 5,366,714 (Bigauskas) proposes the premixing of hydrogen peroxide feed solution with at least one another feedstock (alkali metal chlorate or strong mineral acid) as a remedy to the excessive foaming problem experienced by the SVP-HP process. This introduces an additional step to the overall process which may not always be feasible or practical.
WO-A-93/25470 discloses a process for the production of chlorine dioxide in which hydrogen peroxide is used to reduce the chlorate ion. Hydrogen peroxide is used in an amount from 0.4 to 0.7 mole per mole chlorine dioxide produced. The reaction is performed at subatmospheric pressure at boiling point of the reaction mixture.

### SUMMARY OF THE INVENTION

It has been surprisingly found that the above-described deficiencies of the prior art processes can be obviated or mitigated and a high efficiency and yield of chlorine dioxide production can be achieved by carrying out a subatmospheric, hydrogen peroxide-based chlorine dioxide generation process in such a manner as to continuously maintain in the reaction medium, at steady-state, a residual chlorine concentration of about 0.1 to about 0.5g/L, preferable from about 0.2 to about 0.4 g/L, while at the same time having no residual hydrogen peroxide concentration in said reaction medium.

The high purity of the gaseous chlorine dioxide product resulting from such process was found to be unexpected, having regard to the teaching of the prior art. It was generally believed, in the prior art, that the presence of residual hydrogen peroxide in conjunction with the absence of residual chlorine in the reaction medium at steady-state is a necessary condition required in order to obtain a gaseous chlorine dioxide product of high purity.

### GENERAL DESCRIPTION OF THE INVENTION

Production of chlorine dioxide by reduction of chlorate ion, generally provided in the form of chloric acid, sodium chlorate or mixtures thereof, using hydrogen peroxide, is effected herein in a continuous process in a reaction zone in which an aqueous acid reaction medium, generally using sulfuric acid as the acid source, is maintained at its boiling point, generally about 25 to about 100°C, under a subatmospheric pressure, generally of 0,0067 MPa - 0,053 MPa (about 50 to about 400 mm Hg). Chlorine dioxide is generally removed from the reaction zone in aqueous admixture with steam and is generally recovered as aqueous solution thereof.

The process is operated continuously, generally by feeding the source of chlorate ion, hydrogen peroxide and acid at flow rates sufficient to maintain steady state conditions in the reaction medium. The chlorate ion source may be provided by an aqueous solution of alkali metal or alkaline earth metal chlorate, chloric acid or a combination thereof Preferably sodium chlorate is used as a source of chlorate ions. Typically sodium chlorate at a concentration of about 300 to about 800 g/L is used as the source of chlorate ions. The hydrogen peroxide feed may be provided by a conventional commercial source of aqueous hydrogen peroxide solution, for example, having a concentration of about 50% w/v and the acid source may be provided by a sulfuric acid solution having a concentration of about 10 N to about 36 N. Premixing of at least two feedstocks also is possible.

A catalyst, such as palladium, may be added to improve the efficiency of chlorine dioxide generation. When such catalyst is added, the amount is generally in the range of about 5 to about 50 ppm (as Pd).

A residual concentration of chlorine in the reaction medium at steady-state is maintained continuously during the production of chlorine dioxide at the level of between about 0.1 to about 0.5 g/L, preferably about 0.2 to about 0.4 g/L. The continuous presence of residual chlorine in the reaction medium must be accompanied by the simultaneous absence of residual hydrogen peroxide, in order for high purity chlorine dioxide to be produced. Under such conditions, the purity of the resulting gaseous chlorine dioxide product is typically about 98% or higher, while at the same time foam formation is minimized.

The residual chlorine in the reaction medium can be maintained either by adding chlorine from an external source or by generating chlorine in-situ, for example, by oxidizing chloride ions, for example, added with the sodium chlorate feed solution.

### EXAMPLE

This Example illustrates the process of the invention.

A commercial sub-atmospheric pressure 8 T/D chlorine dioxide generator operating according to ERCO R11™ process conditions of a reaction temperature of 77.0 to 77.4°C, subatmospheric pressure of 190 to 200 mmHg, reaction medium composition of 3.5 to 3.75 or H₂SO₄ and 2.3 to 2.6 M NaClO₃ in the presence of a palladium catalyst at a concentration of 30 ppm (as Pd) was monitored over a period of sixty hours. Chemical feeds to the process were a NaClO₃/NaCl solution with a composition of 705 to 710 g/L NaClO/9.0 to 9.2 g/L NaCI and a commercial 50% aqueous H₂O₂ solution with a concentration of 610 to 620 g/L. Sulfuric acid feed had a concentration of 30 N.

The chlorine dioxide production performance parameters of chemical efficiency and chlorine dioxide purity observed during the entire trial were consistently above a target value of 98%. There was no observed foam formation during the trial. During the trial, the concentration of dissolved chlorine and hydrogen peroxide in the reaction medium were periodically monitored. The dissolved chlorine content was found to be no less than 0.2317 g/L and up to 0.3965 g/L, as determined by analysis of the gases stripped off the liquor. Permanganate tests on the stripped generator liquor samples indicated a non-detectable level of H₂O₂ during the entire trial.

Considering the fast reaction of Cl₂ with H₂O₂, the presence of Cl₂ in the stripped off gases appeared to necessarily lead to the absence of hydrogen peroxide from the generator liquor. Specific support for this statement was provided through laboratory tests in which there was increased the hydrogen peroxide concentration in 3.5 N H₂SO₄ acidifed water solutions initially containing 0.225 g/L of chlorine. The concentration of H₂O₂ measured after its addition and stripping of residual Cl₂ gas, remained undetectable by the permanganate method until the initial concentration of added H₂O₂ exceeded 0.056 g/L. At that point, the Cl₂ concentration of the solution had dropped below 0.0833 g/L, far below the residual levels determined in the generator liquor samples referred to above.

### SUMMARY OF DISCLOSURE

In summary of this disclosure, the present invention provides a novel procedure for preparing chlorine dioxide using hydrogen peroxide as the reducing agent. Modifications are possible within the scope of this invention.

## Claims

1. A continuous process for the production of chlorine dioxide, which comprises:
continuously reducing, using hydrogen peroxide, chlorate ion in an aqueous acid reaction medium which is maintained at its boiling point under a subatmospheric pressure while maintaining in the reaction medium a residual chlorine concentration of about 0.1 to about 0.5 g/L in said reaction medium and while having no residual hydrogen peroxide concentration in said reaction medium.

2. A method according to claim 1, wherein said concentration of chlorine in the reaction medium is about 0.2 to about 0.4 g/L.

## Patentansprüche

1. Kontinuierliches Verfahren zur Herstellung von Chlordioxid, umfassend:
kontinuierliches Vermindern, unter Verwendung von Wasserstoffperoxid, von Chlorat-Ion in einem wässrigen Säurereaktionsmedium, das bei dessen Siedepunkt unter einem subatmosphärischen Druck gehalten wird, wobei in dem Reaktionsmedium eine Chlorrestkonzentration von etwa 0,1 bis etwa 0,5 g/l in dem Reaktionsmedium gehalten wird und wobei keine Restwasserstoffperoxidkonzentration in dem Reaktionsmedium vorliegt.

2. Verfahren nach Anspruch 1, wobei die Konzentration des Chlors in dem Reaktionsmedium etwa 0,2 bis etwa 0,4 g/l ist.

## Revendications

1. Procédé continu pour la production de dioxyde de chlore, qui comprend :
la réduction continue, avec du peroxyde d'hydrogène, d'ions chlorate dans un milieu réactionnel acide aqueux qui est maintenu à son point d'ébullition sous une pression subatmosphérique tout en maintenant dans le milieu réactionnel une concentration de chlore résiduelle d'environ 0,1 à environ 0,5 g/L dans ledit milieu réactionnel et tout en n'ayant pas de concentration de peroxyde d'hydrogène résiduelle dans ledit milieu réactionnel.

2. Procédé selon la revendication 1 où ladite concentration de chlore dans le milieu réactionnel est d'environ 0,2 à environ 0,4 g/L.
